# EUROPEAN PATENT APPLICATION

(11) **EP 1 873 739 A2**
(43) Date of publication of application: **02.01.2008**
(21) Application number: 07012109.0
(22) Date of filing: 21.06.2007
(51) Int. Cl.: G09F 3/08

(54) **RFID tag system for a carpet**

(30) Priority: 27.06.2006 US 426843
(71) Applicant: Datamars SA, 6930 Bedano-Lugano (CH)
(72) Inventor: Malacarne, Enrico, CH-8800 Duebendorf (CH); Salmina, Renzo, CH-6648 Minusio (CH); Nizzola, Luca, CH-6967 Dino (CH)
(74) Representative: Zardi, Marco

(57) **Abstract**

RFID tag system for a carpet (1), having a first side (1a) intended to lean on a floor and a second side (1b) opposite to the first side (1a), comprising an RFID tag (2) and a support (3) for housing and protecting the RFID tag (2), placed on the first (1 a) or second (1 b) side of the carpet (1). The RFID tag system comprises means (4) coupling to the support (3) and fixing it to the first (1a) or second side (1b); the carpet (1) is interposed between the support (3) and means (4). The support (3) comprises a first portion (3b) including a seat (3g) for housing the RFID tag (2). The first portion (3b) also comprises means (3a) for covering and protecting the RFID tag (2) when inserted in the seat (3g). The support (3) comprises a second portion (3c) including a pin element (3c) intended to be inserted through a hole (1c) of the carpet (1) while the first portion (3b) lays on the first side (1a). A size of the first portion (3b) is greater then a size of the hole (1c). The means (4) comprises a first part (4a) having a size greater then the size of the hole 1c and a second part (4b) intended to block the pin element in non removable way.

## Description

### Filed of application

The present invention relates to an RFID tag system for a carpet having a first side intended to lean on a floor and a second side opposite to the first side, said system comprising a support intended to be attached to such first or second side of the carpet, for housing an RFID tag.

More particularly, the present invention relates to an RFID tag system of the type described above wherein the RFID tag includes a memory unit storing a unique identifier of the carpet, used to trace it during the entire life cycle.

### Prior Art

As it is known, RFID tag systems are used to identify carpet, mats, piece goods, moquettes rolled up and similar that are moved during the production and/or stocking phases as well as during rental cycles which comprises delivery to laundries, stocking, washing and delivery to customers.

More particularly, such RFID tag systems comprise an RFID tag including a microprocessor and an antenna used to communicate in radio frequency with a read-write device. The microprocessor includes a processing unit and a memory unit for example storing an identification number of the carpet.

For example, the read-write device may be mounted on a fork lift, that detect the presence of the RFID tag when the carpet is approached.

When the carpet is moved, it is always possible to read its identification number through the read-write device, without a physical interconnection between the RFID tag and the read-write device, rendering the tracking of the carpet very simple also when it is packaged in stock.

More particularly, the carpet comprises a first side intended to lean on a floor and a second side opposite to the first side. The RFID tag should be coupled to the carpet so that it cannot be lost during the use of the carpet or its movement, guaranteeing the identification in all the life cycle of the carpet.

Generally, the first side of the carpet is worked or excavated so to obtain a recess or a cavity intended to host the RFID tag. More particularly, the RFID tag is plugged inside a protective support, for example a plastic support, and than inserted with such a plastic support inside the cavity.

The cavity is than covered and closed, for example gluing a layer of a same material used to manufacture the first side of the carpet. When the read-write device is in proximity of the carpet, it detects the presence of the RFID tag, even if it is hidden inside the cavity of the carpet.

More particularly, the coupling of an RFID tag to a new carpet may be scheduled during the manufacturing phase of the carpets, so to arrange the cavity without altering the quality of the carpet.

On the contrary, when the coupling of an RFID tag is required with a carpet already manufactured, the arrangement of a cavity intended to host an RFID tag is more critical and expensive. Especially for valuable carpets, such a modification of the first side or second side is a critical task that could alters the quality of the carpet.

Also, when an RFID tag system is coupled to a carpet, it is not easy to remove or substitute it, for example when a problem in the communication between the read-write device and the RFID is encountered.

The coupling of an RDIF system with a carpet involves critical and expensive manufacturing phases, due to the modification of at least a side of the carpet, intended to host the RFID tag, at the same time blocking the possibility to easily decoupling the RFID tag from the carpet, for example in case of fault functioning or errors in communication with the read-write device.

The problem at the basis of the present invention is to provide an RFID tag system that is associated to a carpet is a fast-on way without involving expensive manufacturing, at the same time not altering the structure of the carpet, able to be removed from it, substituted or reused in simple way.

### Summary of the Invention

The solution at the basis of the present invention is to provide an RFID tag system for a carpet comprising an RFID tag and a support for housing the RFID tag, the support being attachable on a first or a second side of the carpet through coupling means placed at the opposite side of the support with respect to the carpet.

This problem is solved, according to the present invention, by an RFID system as previously indicated and defined by the characterising portion of the enclosed claim 1.

The features and advantages of the invention will be apparent from the following description of an embodiment thereof, given by way of non-limitative example with reference to the accompanying drawings.

### Brief description of the drawings

Figure 1: schematically shows in a cross sectional view an RFID tag system attached to a portion of a carpet, according to the present invention.
Figure 2: schematically shows, in a front view, the RFID tag system and the portion of the carpet of figure 1.
Figure 3a: schematically shows, in a front view, the RFID tag system with a support completely inserted in a corresponding coupling mean, according to the present invention.
Figure 3b: schematically shows, in a front view, the RFID tag system of figure 3a, with the support partially inserted in the corresponding coupling mean.
Figure 3c: schematically shows, in a perspective view, the RFID tag system of figure 3a and 3b, with the support and the corresponding coupling mean in separated parts.
Figure 4a: schematically shows, in a top view, the RFID tag system attached to the carpet, according to the present invention.
Figure 4b: schematically shows, in a bottom view, the RFID tag system attached to the carpet of figure 4a.
Figure 5: schematically shows, the RFID tag system according to a different embodiment of the present invention.

### Detailed description

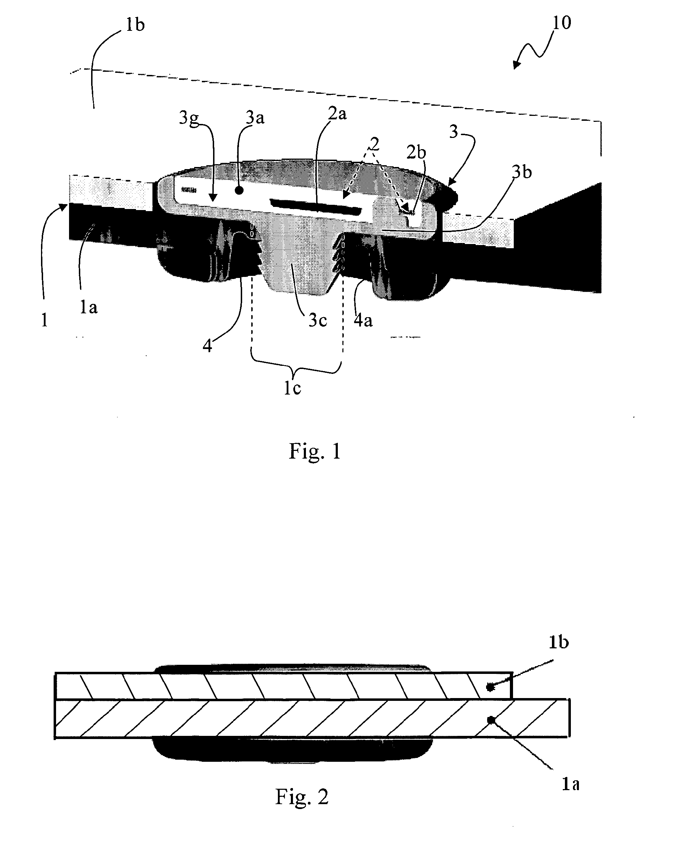

With reference to figure 1 an RFID tag system according to the present invention is shown in a cross sectional view and generally indicated with 10. More particularly the RFID tag system 10 is used to track a carpet 1 comprising a first side 1a generally intended to lean on a floor and a second side 1b opposite to said first side 1a, turned upward.

The first side 1a is generally in rubber or rubber coated so to adhere to the floor while the second side 1b may be in cotton, whole or other material depending on the used of the carpet.

The RFID tag system 10 comprises an RFID tag 2 including an RFID microchip 2a connected to an antenna 2b. A memory portion of the RFID tag 2 stores information to track the carpet 1, for example a unique identification number associated to that carpet.

More particularly the RFID tag system 10 also comprises a support 3 for housing and protecting the RFID tag 2, for example when it is attached on the first side 1a of the carpet 1 and fixed to it. The RFID tag 2 may also be coupled to the carpet 1 with the support 3 fixed to the second side 1b.

According to the present invention, the RFID system 10 comprises at least a mean 4, coupling to the support 3, and fixing it to said first 1a or second side 1b so that the carpet 1 is substantially interposed between said support 3 and said mean 4.

More particularly, the support 3 comprises a first portion 3b, delimitating a seat 3g for housing the RFID tag 2. The first portion 3b comprises protecting means 3a for covering and protecting the RFID tag 2 when inserted in the seat 3g. For example, the protecting means 3a, is an epoxy resin filler is used for filling the seat 3g and for soldering the RFID tag 2 inside it..

Alternatively, other coupling means are used, for example a cap framed-up to the seat of the support and re-movable from an inserted position in the seat to a de-coupled configuration wherein the seat is opened. More particularly, in the de-coupled configuration, the RFID tag is removable from the support. Such RFID tag system is particularly indicated if a carpet does not require a permanent association with the RFID tag 2.

Advantageously, the support 3 also comprises a second portion 3c comprising a pin element, intended to be inserted through a hole 1c, appositely obtained in the carpet 1. The second portion 3c is inserted through the hole 1c, while the first portion 3b lays, for example, on the first side 1a of the carpet 1.

More particularly a size of the first portion 3b is greater then a size of the hole 1c so that, when the second portion 3c is inserted from the first side 1a of the carpet 1, the support 3 cannot be unthreaded through the hole 1c because of the opposition provided by the first portion 3b.

According to the present invention, at least a mean 4 is used to fix the support 3 to the carpet 1 in a self blocking way. More particularly, the mean 4 comprises a first element 4a having a size greater then the size of the hole 1c, so that it cannot pass through the hole 1c. The first element 4a is for example a socket, comprising a fastener mean 4b for the second portion 3c.

The mean 4 is coupled to the support 3, for example inserting the pin element of the second portion 3c inside the first element 4a, the first portion 3b and the first element 4a being substantially fixed through the fastener mean 4b in opposite way with respect to the carpet 1.

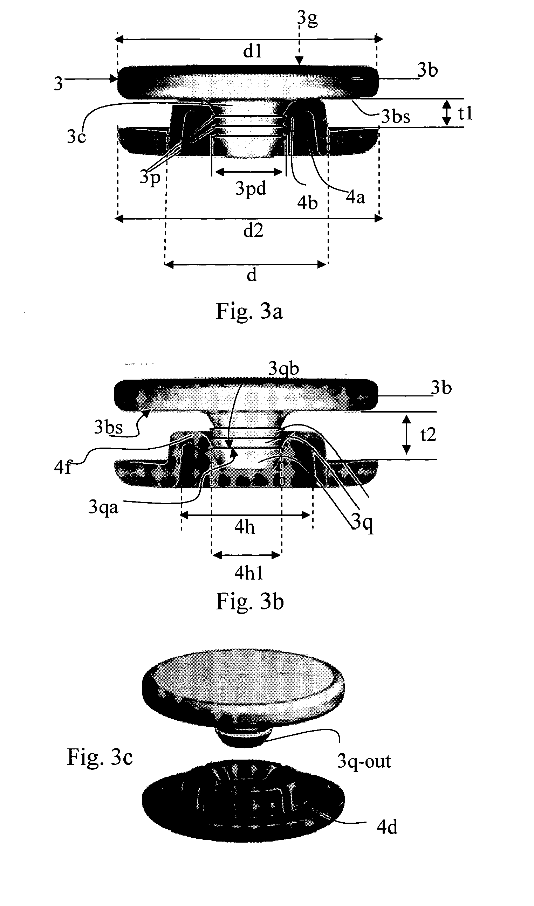

With reference to figure 3a, a front sectional view of the RFID tag system 10 according to the present invention is represented.

The support 3 comprises the first portion 3b delimitating the seat 3g for housing the RFID tag 2; the first portion 3b is substantially coin shaped having a base surface 3bs with a diameter d1 major than a size of the hole 1c of the carpet 1 and an upper surface whit a recess delimitating the seat 3g, intended to host the RFID tag 2 and to be filled by the filler epoxy resin.

The second portion 3c of the support 3 comprises the pin element, intended to be inserted through the hole 1c of the carpet 1 so that the base surface 3bs of the first portion 3b lays on the first side 1a of the carpet 1 while the pin element is inserted through the hole 1c.

More particularly, the pin element comprises a plurality of blocking pawls 3p intended to couple to corresponding fastener means 4b on the mean 4.

For example a shape of the pin element is a stack of truck cones 3q, each cone having a major base 3qa in contact with a minor base 3qb of a successive cone 3q, and so that the outermost major and minor bases of the stack are respectively, fixed to the base surface 3bs of the first portion 3b and free to be inserted through the hole 1c.

Advantageously, an outermost truck cones 3q-out facilitates the insertion of the pin element through the hole 1c even when the width of such hole 1c is strictly less than its major base 3qa, due to a partial deformability of the carpet 1.

The mean 4 comprises the first element 4a having a size greater then the size of the hole 1c of the carpet 1. For example, the first element 4a has a cylindrical shape having a diameter d grater than size of the hole 1c and a central hole 4h1 to accept the pin element.

The mean 4 also comprises fastener means 4b intended to couple to the corresponding blocking pawls 3p of the pin element. For example the central hole 4h of the first element 4a is provided with a border flange 4f delimitating a restriction of a diameter of the central hole 4h itself.

The border flange 4f has an internal diameter 4h1 substantially equal to or lightly minor than a diameter 3pd of a major base of a truck cone 3p of the pin element so that, when the pin element is inserted through the hole 4h, the blocking pawls 3p of the pin element may couple with the border flange 4f of the fastener mean 4b.

Advantageously, the coupling of the blocking pawls 3p and the border flange 4f of the fastener mean 4b guarantees a permanent association between the carpet 1 and the RFID tag 2. In fact, such coupling cannot be removed due to the size and shape of the blocking pawls 3p and the border flange 4f.

Even if the internal diameter 4h1 of the border flange is lightly minor than the diameter 3pd of the major base of the truck cone 3p, the pin element is inserted through a pressure, temporarily deforming the border flange 4f to pass through the central hole 4h1. When the blocking pawls 3p are inserted through the central hole 4h1, their original shape naturally restores and couples with the border flange 4f, avoiding the support 3 to exit from the mean 4.

Advantageously, according to the present invention, a number of blocking pawls 3p inserted through the hole 4h1 is chosen depending on a thickness of the carpet 1.

With reference to figure 3a, the pin element is inserted in the hole 4h1 with all the blocking pawls 3p so that the base surface 3bs of the first portion 3b is in contact with a surface of the first element 4a prospecting to the carpet 1. In the representation given in figure 3a, the support 3 and the mean 4 are coupled through the hole 1c for a carpet 1 with a thickness t1.

For a carpet 1 with a thickness t2 grater that the thickness t1, the pin element is inserted in the hole 4h1 only with some blocking pawls 3p, as schematically represented in figure 3b. The base surface 3bs of the first portion 3b is not in contact with said surface of the first element 4a. Advantageously, the blocking pawls 3p may be set according to the thickness of a carpet 1, for example giving an specific high and width to the truck cones 3p.

The support 3 and the truck cones 3p are be derived by a merger of a same material so to constitute a single element.

The mean 4 also comprises a washer 4d, concentric to the first element 4a and substantially having a same diameter of the first portion 3b of the support 3.

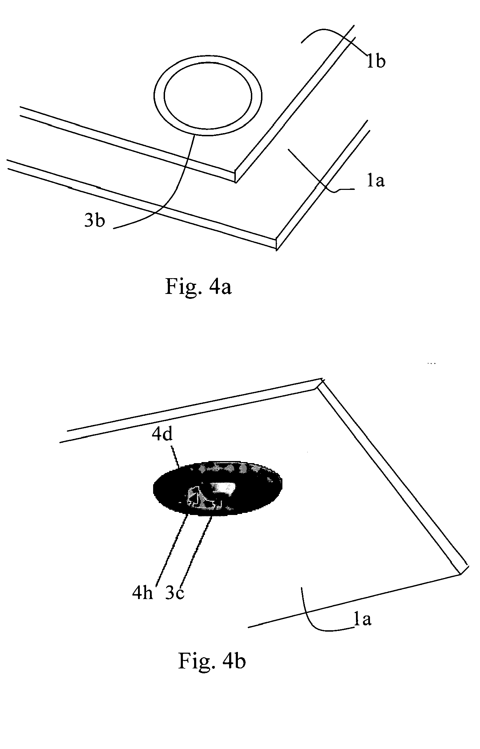

With reference to figure 4a and 4b, the first side 1a and the second side 1b of the carpet 1 are represented with the RFID tag system 10 comprising the mean 4 and the support 3, fixed together with the first side 1a substantially interposed.

Even if not represented, the RFID tag system 10 may be fixed with both the first side 1a and the second side substantially interposed between the mean 4 and the support 3.

A little area of the second side 1b of the carpet 1, corresponding to the area delimited by the base surface 3bs of the first portion 3b, is peeled out to host such first portion 3b. Even if not represented, a hole 1c is made in the middle of the peeled area to allow the insertion of the second portion 3c, comprising the pin element.

Also a little area of the first side 1a of the carpet 1, corresponding to the area delimited by the first element 4a of the mean element 4, is cut out to host such first element 4a. The washer 4d of the mean 4 remains outside the cut out area, substantially in contact with the floor.

Conventional mans are used to peel the carpet 1 and to make the hole 1c inside it, for example a drill machine to drill the hole 1c and a scrape machine to shave off the little area of the second side 1b of the carpet 1.

Advantageously, the washer 4d is a protection thickness for the pin element. In fact the thickness of the washer 4d prevent that the weight of a person, treading on the carpet 1, crushes the pin element on the floor, being the pin element always included in a space delimited by the hole 4h.

More particularly, a length of the pin element may be longer than a high of the first element 4a so that, when the pin element is inserted through the hole 4h, it partially juts out from the first element 4a. In this case, in order to prevent a contact between the pin element and the floor, a portion of the pin element is cut so that its remaining portion substantially remains inside a space delimited by the first element 4a.

According to a different embodiment of the present invention, a permanent coupling of the mean 4 and the support 3 is determined after the insertion of the pin element through the hole 4h, for example through a soldering process.

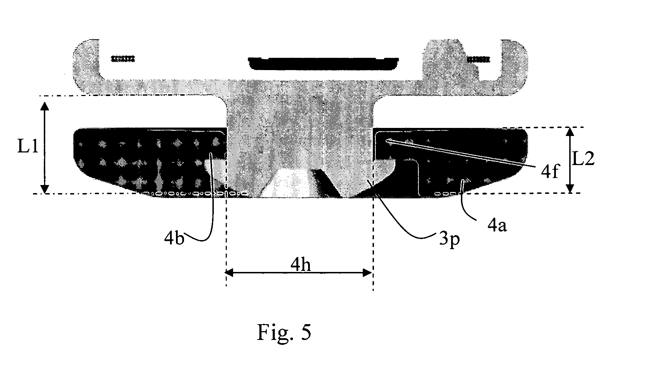

With reference to figure 5 it is schematically represented a pin element, already inserted through the hole 4h and sealed inside it.

According to this embodiment, the pin element is a stalk intended to be inserted through the hole 4h. A length L1 of the pin element is greater than a depth L2 of the hole 4h so that an inserted portion of the pin elements juts out from it.

Such inserted portion that juts out, is sealed to the mean 4, for example through an overheating process intended to merge it into the hole 4h.

Additional material, for example a same material composing the first element 4a, may be used to fill the hole 4h and to permanently seal the pin element to the first element 4a.

## Claims

1. RFID tag system (10) for a carpet (1), having a first side (1a) intended to lean on a floor and a second side (1b) opposite to said first side (1a), comprising an RFID tag (2) and a support (3) for housing said RFID tag (2), intended to be placed on said first (1a) or second (1b) side of said carpet (1), **characterized by** comprising means (4) coupled to said support (3) from the opposite side of said carpet (1).

2. RFID tag system (10) according to claim 1 **characterized by** the fact that said support (3) comprises a seat (3g) for said RFID tag (2).

3. RFID tag system (10) according to claim 2 **characterized by** the fact that said support (3) comprises means (3a) for protecting said seat (3g).

4. RFID tag system (10) according to claim 2 **characterized by** the fact that said means (3a) comprises an epoxy resin filling said seat (3g) and sealing permanently said RFID tag (2) inside it.

5. RFID tag system (10) according to claim 1 **characterized by** the fact that said support (3) comprises a second portion (3c) including a pin element (3c) intended to be inserted through a hole (1c) of said carpet (1).

6. RFID tag system (10) according to claim 5 **characterized by** the fact that a size of said support (3) is greater then a size of said hole (1c).

7. RFID tag system (10) according to claim 6 **characterized by** the fact that a size of said mean (4) is greater then said size of said hole (1c).

8. RFID tag system (10) according to claim 7 **characterized by** the fact that said mean (4) comprises one or more fastener means (4b).

9. RFID tag system (10) according to claim 8 **characterized by** the fact that said pin element comprises one or more blocking pawls (3p).

10. RFID tag system (10) according to claim 9 **characterized by** the fact that said mean (4) comprises a hole (4h1) to receive said pin element.

11. RFID tag system (10) according to claim 10 **characterized by** the fact that said fastener mean (4b) comprises a border flange (4f).

12. RFID tag system (10) according to claim 11 **characterized by** the fact that said border flange (4f) couples in non removable way to said blocking pawls (3p), being said pin element inserted in said hole (4h1) of said mean (4).

13. RFID tag system (10) according to claim 3 **characterized by** the fact that said means (3a) comprises a cap linked in rotation to said seat and movable from a first position wherein it is possible to plug/unplug said RFID tag in/out said seat and a second position in which it closes said seat.
